# EUROPÄISCHE PATENTSCHRIFT

(11) **EP 2 902 645 B1**
(45) Veröffentlichungstag und Bekanntmachung des Hinweises auf die Patenterteilung: **29.08.2018**
(21) Anmeldenummer: 15152600.1
(22) Anmeldetag: 27.01.2015
(51) Int. Cl.: F16B 25/00

(54) **Schraube zum Einschrauben in ein Bohrloch und Vorspann-Anordnung mit einer derartigen in das Bohrloch eingeschraubten Schraube**
Screw for screwing into a bore hole and pretensioning assembly with such a screw screwed into the bore hole
Vis destinée à être vissée dans un trou de forage et agencement de précontrainte doté d'une telle vis vissée dans le trou de forage

(30) Priorität: 31.01.2014 DE 102014201811
(43) Veröffentlichungstag der Anmeldung: 05.08.2015
(73) Patentinhaber: TOGE Dübel GmbH & Co. KG, 90431 Nürnberg (DE)
(72) Erfinder: Gerhard, Andreas, 90427 Nürnberg (DE)
(74) Vertreter: Rau, Schneck & Hübner Patentanwälte Rechtsanwälte PartGmbB

(56) Entgegenhaltungen:
- EP-A2- 1 905 923
- DE-A1- 19 818 739
- DE-A1-102011 102 825

## Beschreibung

Die Erfindung betrifft eine Schraube zum Einschrauben in ein Bohrloch sowie eine Vorspann-Anordnung mit einer derartigen in das Bohrloch eingeschraubten Schraube.

Die DE 10 2011 102 825 A1 offenbart eine Verbindungsanordnung zur Herstellung einer Durchstanzsicherung.

Die EP 1 905 923 A2 offenbart eine Anordnung zum Verstärken von bestehenden Bauteilen gegen Durchstanzen. Eine derartige Anordnung umfasst einen Ankerstab mit einem Verankerungsabschnitt, einen Gewindeabschnitt und einen dazwischen angeordneten Zwischenabschnitt mit einer anti-adhäsiven Oberfläche. Ein derartiger Ankerstab ermöglicht ein Vorspannen des Ankerstabs in einem Bohrloch, indem der Ankerstab mit dem Verankerungsabschnitt mittels einer aushärtbaren Masse in dem Bohrloch festgeklebt wird. Das Verankern des Ankerstabs ist kompliziert und zeitaufwändig. Insbesondere ist eine lange Wartedauer erforderlich, um das Aushärten der aushärtbaren Masse abzuwarten. Erst nach dem Aushärten der Masse ist der Ankerstab in dem Bohrloch verankert. Wenn der Ankerstab in eine nach unten geöffnete Bohrung in einer Decke verankert werden soll, sind zusätzliche Maßnahmen erforderlich, um zu vermeiden, dass die noch nicht ausgehärtete aushärtbare Masse aus der Bohrung tropft.

Der vorliegenden Erfindung liegt die Aufgabe zugrunde, eine Schraube derart zu schaffen, dass sie unkompliziert in ein Bohrloch eingeschraubt und dort vorgespannt werden kann.

Die Aufgabe wird durch die Merkmale des Anspruchs 1 gelöst. Der Kern der Erfindung besteht darin, dass eine Schraube zum Einschrauben in ein Bohrloch in einen porösen Werkstoff wie beispielsweise Beton oder Asphalt entlang einer Mittel-Längs-Achse verschiedene, funktional voneinander getrennte Abschnitte aufweist. Die Schraube umfasst einen Kern mit einem Einführende, das zum Einführen der Schraube in das Bohrloch dient. Einstückig mit dem Kern ausgebildet ist ein Schneidgewinde, das sich entlang eines am Einführende angeordneten Schneidgewinde-Abschnitts erstreckt. Das Schneidgewinde dient zum Einschneiden desselben in den Werkstoff. Ebenfalls einstückig mit dem Kern ausgebildet ist ein Vorspannabschnitt, der zum Vorspannen der Schraube in den Werkstoff dient. Entlang der Mittel-Längs-Achse ist zwischen dem Schneidgewinde-Abschnitt und dem Vorspann-Abschnitt ein Kraftentkopplungs-Abschnitt vorgesehen. Der Kraftentkopplungs-Abschnitt weist eine glatte Oberfläche auf. Der Kraftentkopplungs-Abschnitt ist insbesondere gewindelos. Dadurch kann eine Vorspannkraft von der Schraube zwischen dem Schneidgewinde im Bereich des Einführendes der Schraube und dem Vorspann-Abschnitt, der beabstandet von dem Einführende am Kern angeordnet ist, in den Werkstoff eingebracht werden. Dadurch, dass die Schraube im Bereich des Kraftentkopplungs-Abschnitts eine glatte Oberfläche aufweist, ist die Schraube in dem Kraftentkopplungs-Abschnitt von dem porösen Werkstoff sowie einer möglicherweise zwischen dem Werkstoff und der Schraube vorhandenen aushärtbaren Klebemasse entkoppelt. Das bedeutet, dass einer Relaxation der Vorspannung vorgebeugt werden kann. Auch ein Setzen bzw. Nachgeben des porösen Werkstoffs in Folge einer Belastung führt nicht dazu, dass die vorgespannte Schraube die Vorspannung verliert. Die erfindungsgemäße Schraube ist geeignet, eine eingebrachte Vorspannung beim Setzen der Schraube dauerhaft zu erhalten. Die aufgebrachte Vorspannung wird durch die Selbstdehnung der Schraube, die insbesondere aus einem Stahlwerkstoff hergestellt ist, gewährleistet. Wäre die Schraube ohne Kraftentkopplungs-Abschnitt ausgeführt, also entlang ihrer vollen Länge in dem Bohrloch mittels der aushärtbaren Masse eingeklebt, würde eine Zuglast der Vorspannung vorrangig in dem der Bohrlochöffnung zugewandten Bereich der Schraube übertragen werden. Eine Dehnung der Schraube selbst wäre auf einen Bereich reduzierter Länge entlang der Mittel-Längs-Achse reduziert. Dadurch, dass die Schraube im Bereich des Kraftentkopplungs-Abschnitts eine freie Schraubenlänge aufweist, kann im Bereich der freien Schraubenlänge, also entlang der Länge des Kraftentkopplungs-Abschnitts, eine Selbstdehnung der Schraube realisiert werden. Dadurch, dass die Schraube ein Schneidgewinde aufweist, kann die Schraube direkt und unmittelbar in den das Bohrloch umgebenden Werkstoff eingeschraubt werden. Es ist nicht zwingend erforderlich, zum Verankern der Schraube in dem Bohrloch eine aushärtbare Masse vorzusehen. Da die Schraube eigenständig in dem Bohrloch durch das Schneidgewinde gehalten ist, ist verhindert, dass die Position der Schraube in dem Bohrloch unbeabsichtigt verändert wird. Insbesondere infolge des nicht unerheblichen Eigengewichts der Schraube kann bei einem herkömmlichen Verbundankersystem, bei dem der Verbundanker mittels einer aushärtbaren Masse in dem Bohrloch befestigt wird, unbeabsichtigt verlagert werden oder vollständig aus dem Bohrloch fallen. Beim Eindrehen der Schraube entsteht ein Hinterschnitt des Schneidgewindes, insbesondere an Gewindeflanken des Schneidgewindes. Beim Eindrehen der Schraube wird das zur Vorspannung erforderliche Drehmoment sofort und unmittelbar aufgebracht. Ein kostenintensives Nachspannen nach dem Aushärten der aushärtbaren Masse wie bei herkömmlichen Verbundankersystemen entfällt. Zusätzliche Arbeitsschritte sind nicht erforderlich. Die erfindungsgemäße Schraube kann zeitsparend und fehlerunanfällig eingesetzt werden. Insbesondere ist es möglich, die Schraube unmittelbar in einem Bohrloch zu verankern, ohne dass weitere Hilfsmittel erforderlich wären. Durch die Kraftentkopplung in den Kraftentkopplungs-Abschnitt ermöglicht die erfindungsgemäße Schraube das Aufnehmen von Schwingungen wie beispielsweise Vibrationen. Derartige Vibrationen können beispielsweise durch Fahrzeuge hervorgerufen werden, die beispielsweise über eine Brücke fahren. Schwingungen und/oder Vibrationen können auch durch Maschinen und/oder Anlagen erzeugt werden, die in einem Bauwerk vorgesehen sind. Schwingungen und Vibrationen können aber auch Erdbebenschwingungen verursacht sein. Dadurch, dass die Schraube nicht vollflächig in dem Bohrloch eingeklebt ist, ist die in dem Bohrloch verankerte und befestige Schraube vergleichsweise flexibel. Die in dem Bohrloch eingeschraubte Schraube toleriert eine dynamische Schwingungsbelastung. Die erfindungsgemäße Schraube ist insbesondere dazu geeignet, Rahmenbauwerke, insbesondere Beton-Rahmenbauwerke, seismisch zu ertüchtigen. Zusätzlich oder alternativ kann die Schraube als Durchstanzbewehrung und/oder Schubbewehrung vorteilhaft genutzt werden.

Vorteilhaft ist eine Schraube, bei der der Vorspann-Abschnitt ein einstückig mit dem Kern ausgebildetes Vorspanngewinde aufweist, an dem ein Vorspannmittel, insbesondere eine Kontermutter, angeschraubt werden kann. Eine derartige Schraube vereinfacht das Aufbringen einer Vorspannung. Insbesondere kann der Betrag der Vorspannung stufenlos festgelegt werden.

Vorteilhaft ist eine Schraube mit einer glatten Oberfläche derart, dass die maximale Raumtiefe höchstens 6,3 µm, höchstens 1,0 µm, höchstens 0,25 µm und insbesondere höchstens 0,1 µm beträgt. Dadurch ist gewährleistet, dass die Schraube in dem Kraftentkopplungs-Abschnitt nicht an einer Innenseite des Bohrlochs und/oder einer gegebenenfalls vorhandenen aushärtbaren Masse anhaftet. Dadurch ist die Kraftentkopplung in dem Kraftentkopplungs-Abschnitt zuverlässig gewährleistet.

Vorteilhaft ist eine Schraube, bei der die Oberfläche des Kraftentkopplungs-Abschnitts durch Schleifen und/oder Polieren hergestellt ist. Dadurch ist eine glatte Oberfläche zu Kraftentkopplung unmittelbar herstellbar. Eine derartige Schraube ist einteilig hergestellt. Eine derartige Schraube ist aus einem einzigen Material hergestellt. Das Material der Schraube ist homogen. Die Herstellung der Schraube ist unkompliziert und insbesondere für die Massenproduktion vorteilhaft.

Vorteilhaft ist eine Schraube, bei der in dem Kraftentkopplungs-Abschnitt ein Schrumpfschlauch aufgeschrumpft ist. Ein derartiger Schlauch ist aus Kunststoff hergestellt. Der Schlauch wird auf die Schraube im Bereich des Kraftentkopplungs-Abschnitts aufgebracht. Anschließend wird die Schraube mit dem aufgesetzten Schrumpfschlauch erhitzt, so dass das Kunststoffmaterial des Schrumpfschlauches zumindest teilweise und/oder abschnittsweise schmilzt und eine dauerhafte Verbindung mit dem Kern der Schraube bildet. Die Schraube ist mit dem Schrumpfschlauch lösbar verbunden. Die Schraube ist einteilig ausgeführt. Durch die Verwendung des Schrumpfschlauchs kann eine zuvor hergestellte Schraube unkompliziert und insbesondere auch zu einem deutlich späteren Zeitpunkt funktional aufgewertet werden. Insbesondere ist es nicht erforderlich, dass die Schraube in dem Kraftentkopplungs-Abschnitt unterhalb des Schrumpfschlauches, also an einer Innenseite des Schrumpfschlauches, eine besondere Oberflächenqualität aufweist. In diesem Bereich kann die Oberfläche der Schraube unbehandelt sein.

Vorteilhaft ist eine Schraube mit einem Schneidgewinde-Durchmesser des Schneidgewindes, der den maximalen Durchmesser der Schraube bildet. Dadurch wird insbesondere vermieden, dass ausgehend von dem Einführende der Schraube entlang der Mittel-Längs-Achse dem Schneidgewinde-Abschnitt nachfolgender Kraftentkopplungs-Abschnitt und Vorspann-Abschnitt nicht zu einem Klemmen des Schraubenschaftes im Bohrloch führen. Die Schraube toleriert also kleinere Fertigungsabweichungen entlang der Mittel-Längs-Achse im Bereich des Kraftentkopplungs-Abschnitts und/oder des Vorspann-Abschnitts, so dass ein Taumeln der Schraube im Bohrloch beim Eindrehen derselben unproblematisch ist. Dadurch ist es insbesondere erleichtert, besonders lange Schrauben in tiefe Bohrlöcher einzuschrauben.

Vorteilhaft ist eine Schraube mit einem Drehübertragungsmittel, das insbesondere einstückig an der Schraube angeformt ist. Insbesondere ist das Drehübertragungsmittel als Außen-Sechskant-Profil ausgeführt. Es sind auch andere, insbesondere standardisierte, Geometrien denkbar, um ein Drehmomentübertragungsmittel zu realisieren. Insbesondere sind auch Innen-Sechskant-Profilformen für das Drehmomentübertragungsmittel möglich. Das Drehmomentübertragungsmittel dient zum Übertragen eines Drehmoments von einem dafür vorgesehen Werkzeug auf die Schraube, um die Schraube in das Bohrloch in dem Werkstoff eindrehen zu können.

Besonders vorteilhaft ist, wenn das Drehmomentübertragungsmittel an einem dem Ausführende gegenüberliegenden Außenende der Schraube angeordnet ist. Dadurch ist gewährleistet, dass das Drehmomentübertragungsmittel mit einem dafür vorgesehenen Werkzeug für einen Bearbeiter unproblematisch erreichbar ist. Das Eindrehen der Schraube in das Bohrloch ist dadurch vereinfacht.

Es ist eine weitere Aufgabe der vorliegenden Erfindung, eine Vorspann-Anordnung zu schaffen, damit ein Werkstoff zumindest bereichsweise verbessert vorgespannt werden kann.

Diese Aufgabe wird durch die Merkmale des Anspruchs 9 gelöst. Der Kern der Erfindung besteht darin, dass in ein in einem Werkstoff angeordnetes Bohrloch mit einer Bohrloch-Längsachse eine erfindungsgemäße Schraube eingeschraubt ist. Die Vorteile einer derartigen Anordnung entsprechen im Wesentlichen den Vorteilen der Schraube selbst, worauf hiermit verwiesen wird.

Vorteilhaft ist eine Vorspann-Anordnung, bei der das Bohrloch einen einer Bohrloch-Öffnung benachbarten, ersten Bohrloch-Durchmesser und einen der Bohrloch-Öffnung entfernten, zweiten Bohrloch-Durchmesser aufweist. Ein derartiges Bohrloch ist unkompliziert und damit vergleichsweise kostengünstig herstellbar. Insbesondere kann ein derartiges Bohrloch dadurch hergestellt werden, dass zunächst ein vergleichsweise tiefes Bohrloch mit dem zweiten Bohrloch-Durchmesser bis zu einer Gesamttiefe gebohrt wird. Anschließend wird das Bohrloch mit dem ersten Bohrloch-Durchmesser auf eine erforderliche Tiefe, die kleiner ist als die Gesamttiefe des Bohrlochs, aufgebohrt. Insbesondere wurde erkannt, dass es bei der erfindungsgemäßen Schraube nicht erforderlich ist, diese über die gesamte Länge des Bohrlochs bis zu einem End-Verankerungspunkt in den Untergrund, also das das Bohrloch umgebende Material, einzuschneiden. Dadurch wird vermieden, dass das Schneidgewinde der Schraube während des Eindrehens der Schraube in das Bohrloch sich abnutzt, also verschleißt. Dies kann bei Schrauben, die aus dem Stand der Technik bekannt sind, dazu führen, dass in Folge der Abnutzung des Schneidgewindes, die Schraube nicht vollständig in das Bohrloch eingedreht werden kann. Zudem bewirkt eine Abnutzung des Schneidgewindes, dass der Außendurchmesser des Schneidgewindes während des Eindrehens reduziert wird und somit ein zu erzeugender Hinterschnitt, der für die Tragfähigkeit der Schraube in dem Bohrloch essenziell ist, reduziert wird. Um diese Nachteile zu überwinden, sind aus dem Stand der Technik speziell anzufertigende Bohrlöcher bekannt, die einen ersten, kleineren Bohrloch-Durchmesser aufweisen, der der Bohrloch-Öffnung zugewandt ist. Dieses spezielle Bohrloch weist zudem einen Abschnitt auf, der einen gegenüber dem ersten Bohrloch-Durchmesser vergrößerten zweiten Bohrloch-Durchmesser aufweist. Das bedeutet, dass dieses Bohrloch am Bohrlochgrund aufgeweitet ist. Die Herstellung einer derartigen Bohrung ist kompliziert und kostenintensiv. Bei der erfindungsgemäßen Vorspann-Anordnung ist das aus dem Stand der Technik bekannte Prinzip der Reihenfolge der Bohrloch-Durchmesser entlang der Mittel-Längs-Achse umgedreht.

Besonders vorteilhaft ist eine Vorspann-Anordnung, bei der der erste Bohrloch-Durchmesser größer ist als der zweite Bohrloch-Durchmesser. Insbesondere beträgt der erste Bohrloch-Durchmesser mindestens 105%, insbesondere mindestens 110% und insbesondere mindestens 120% des zweiten Bohrloch-Durchmessers. Eine derartige Bohrung, die auch als Stufenbohrung bezeichnet werden kann, ist vergleichsweise unkompliziert und deshalb kostengünstig herstellbar.

Vorteilhaft ist eine Vorspann-Anordnung, bei der ein Schneidgewinde-Durchmesser des Schneidgewindes größer ist als der erste Bohrloch-Durchmesser. Das bedeutet, dass das Verhältnis des Schneidgewinde-Durchmessers zu dem ersten Bohrloch-Durchmesser größer ist als 1 und höchstens 1,05 beträgt. Insbesondere beträgt das Verhältnis Schneidgewinde-Durchmesser zu erstem Bohrloch-Durchmesser höchstens 1,02 und insbesondere höchstens 1,01. Dadurch ist einerseits gewährleistet, dass durch das Eindrehen der Schraube in das Bohrloch entlang der Bohrloch-Längsachse das Bohrloch im Bereich des ersten Bohrloch-Durchmessers durch das Schneidgewinde aufgekratzt wird. Das Aufrauen der Oberfläche des Bohrlochs ist insbesondere dann vorteilhaft, wenn die Schraube im Bohrloch zusätzlich durch eine aushärtbare Verbundmasse gehalten werden soll. Üblicherweise wird ein derartiges Bohrloch im Diamantkernbohrverfahren hergestellt. Dies führt dazu, dass die Bohrlochwandung eine sehr geringe Rautiefe ausführt. Die Bohrlochwandung ist extrem glatt, so dass ein Haften der aushärtbaren Verbundmasse an der Bohrlochwandung bei einem aus dem Stand der Technik mittels Diamantkernbohrverfahren hergestellten Bohrloch problematisch ist. Durch das Aufrauen der Bohrlochwand ist eine verbesserte Haftung zwischen der aushärtbaren Klebemasse und der Bohrlochwandung gewährleistet. Gleichzeitig ist der erste Bohrloch-Durchmesser ausreichend groß, damit ein unerwünschtes Abnutzen des Schneidgewindes während des Eindrehens der Schraube in das Bohrloch vermieden wird. Dadurch, dass das Bohrloch geringfügig kleiner ist als der Schneidgewinde-Durchmesser der Schraube, ist die Schraube an dem Bohrloch im Bereich des ersten Bohrloch-Durchmessers beim Einschrauben abgestützt. Dadurch ist eine Zentrierung der Schraube gewährleistet.

Vorteilhaft ist eine Vorspann-Anordnung, bei der ein Schneidgewinde-Durchmesser des Schneidgewindes größer ist als der zweite Bohrloch-Durchmesser des Bohrlochs. Insbesondere beträgt der Schneidgewinde-Durchmesser mindestens 101%, insbesondere mindestens 105% und insbesondere mindestens 110% des zweiten Bohrloch-Durchmessers. Dadurch ist gewährleistet, dass die Schraube mit dem Schneidgewinde zuverlässig in dem Bohrloch im Bereich des zweiten Bohrloch-Durchmessers verankert ist. Ein das unbeabsichtigte Lösen der Schraube aus dem Bohrloch gewährleistender Hinterschnitt ist ausreichend.

Vorteilhaft ist eine Vorspann-Anordnung mit einer Unterlegscheibe, die zwischen einem an der Schraube befestigbaren Vorspannmittel und einer Auflagefläche des Werkstoffs angeordnet ist. Die Unterlegscheibe ermöglicht ein unkompliziertes Übertragen einer Vorspannkraft von dem Vorspannmittel auf den Werkstoff. Insbesondere deshalb, da das Bohrloch im Bereich der Bohrloch-Öffnung einen ersten Bohrloch-Durchmesser aufweist, der größer ist als ein Kerndurchmesser der Schraube, gewährleistet die Unterlegscheibe ein unbeabsichtigtes Ausbrechen des Bohrlochs im Bereich der Bohrloch-Öffnung. Insbesondere ist die Auflagefläche des Werkstoffs senkrecht zur Bohrloch-Längsachse orientiert.

Besonders vorteilhaft ist eine Vorspann-Anordnung, bei der die Auflagefläche gegenüber einer Außenseite des Werkstoffs entlang der Bohrloch-Längsachse nach hinten versetzt angeordnet ist. Dadurch ist es möglich, die Vorspann-Anordnung versteckt an dem Werkstoff anzubringen. Insbesondere dann, wenn die Vorspann-Anordnung in einem Außenbereich eines Bauwerks, insbesondere in einem Sichtbereich einer Fassade anzubringen ist, kann eine derartige verstecke Anordnung ästhetisch ansprechend ausgeführt sein.

Weitere vorteilhafte Ausgestaltungen, zusätzliche Merkmale und Einzelheiten der Erfindung ergeben sich aus der nachfolgenden Beschreibung eines Ausführungsbeispiels anhand der Zeichnung. Es zeigen:
- Fig. 1: einen Längsschnitt einer Vorspann-Anordnung mit einer erfindungsgemäßen Schraube, die in ein Bohrloch eines Werkstoffs eingeschraubt ist,
- Fig. 2: eine Detailansicht gemäß Detail II in Fig. 1, und
- Fig. 3: eine Detailansicht gemäß Detail III in Fig. 1.

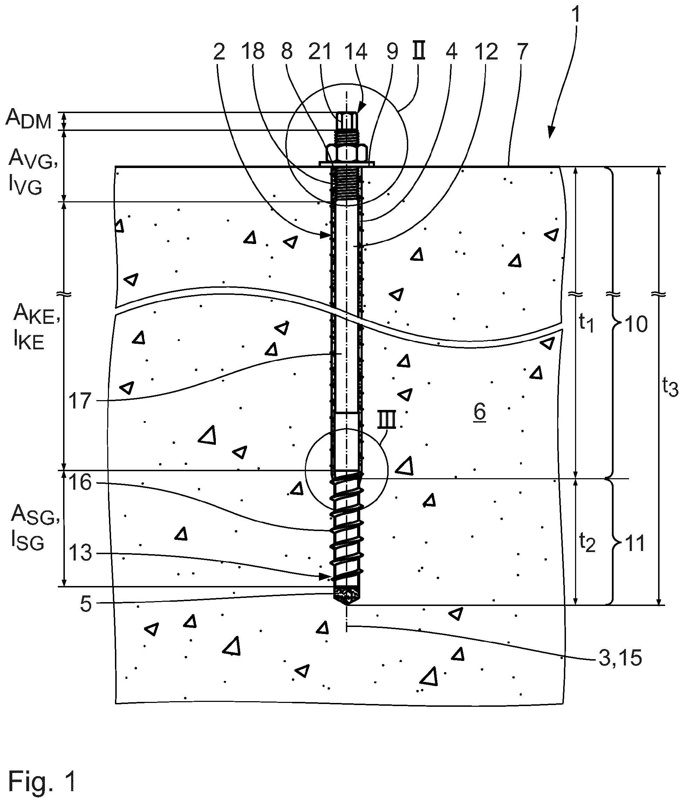

Im Folgenden wird anhand der Fig. 1 bis 3 eine erfindungsgemäße Vorspann-Anordnung, die als Ganzes mit 1 bezeichnet ist, näher erläutert. Die Vorspann-Anordnung 1 umfasst eine Schraube 2. Die Schraube 2 ist in einem eine Bohrloch-Längsachse 3 aufweisenden Bohrloch 4 eingeschraubt. In dem Bohrloch 4 ist zudem eine aushärtbare Verbundmasse 5 vorgesehen, die einen verbesserten Halt der Schraube 2 in dem Bohrloch 4 ermöglicht.

Das Bohrloch 4 ist in einem porösen Werkstoff 6 ausgeführt. Gemäß dem gezeigten Ausführungsbeispiel ist der poröse Werkstoff 6 Beton. Der Werkstoff 6 weist eine äußere Oberfläche 7 auf, die eine Bohrloch-Öffnung 8 des Bohrlochs 4 begrenzt. In einem die Bohrloch-Öffnung 8 angrenzenden Bereich der Oberfläche 7 ist eine Auflagefläche vorgesehen, die zum Vorspannen der Schraube 2 in dem Werkstoff 6 dient.

Entlang der Bohrloch-Längsachse 3 weist das Bohrloch 4 einen ersten Bohrloch-Abschnitt 10 und einen zweiten Bohrloch-Abschnitt 11 auf. Der erste Bohrloch-Abschnitt 10 weist eine erste Tiefe t₁ auf, die sich ausgehend von der Bohrloch-Öffnung 8 entlang der Bohrloch-Längsachse 3 in das Innere des Bohrlochs 4 erstreckt. Die zweite Bohrloch-Tiefe t₂ erstreckt sich entlang des zweiten Bohrloch-Abschnitts 11. Die Gesamtbohrlochtiefe t₃ ergibt sich aus der Summe der ersten Bohrloch-Tiefe t₁ und der zweiten Bohrloch-Tiefe t₂. Entlang der Bohrloch-Längsachse 3 ist die Darstellung der Vorspann-Anordnung 1 in Fig. 1 gebrochen dargestellt. Das bedeutet, dass insbesondere die erste Bohrloch-Tiefe t₁ deutlich größer ist als die zweite Bohrloch-Tiefe t₂. Insbesondere beträgt die erste Bohrloch-Tiefe t₁ mindestens 75%, insbesondere mindestens 80% und insbesondere mindestens 90% der Gesamtbohrlochtiefe t₃. Entsprechend beträgt die zweite Bohrloch-Tiefe t₂ höchstens 25%, insbesondere höchstens 20% und insbesondere höchstens 10% der Gesamtbohrlochtiefe t₃.

Im ersten Bohrlochabschnitt 10 weist das Bohrloch 4 einen ersten Bohrloch-Durchmesser d₁ auf. Im zweiten Bohrlochabschnitt 11 weist das Bohrloch 4 einen zweiten Bohrloch-Durchmesser d₂ auf. Der erste Bohrloch-Durchmesser d₁ ist größer als der zweite Bohrloch-Durchmesser d₂. Gemäß dem gezeigten Ausführungsbeispiel beträgt der erste Bohrloch-Durchmesser d₁ 105% des zweiten Bohrloch-Durchmessers d₂.

Im Folgenden wird die erfindungsgemäße Schraube 2 näher erläutert. Die Schraube 2 weist einen im Wesentlichen zylindrischen Kern 12 auf. Die Schraube 2 hat ein Einführende 13, mit dem die Schraube 2 durch die Bohrloch-Öffnung 8 in das Bohrloch 4 eingeführt wird. Dem Einführende 13 gegenüberliegend angeordnet ist ein Außenende 14 der Schraube 2. Gemäß dem gezeigten Ausführungsbeispiel ist das Außenende 14 außerhalb des Bohrlochs 4 angeordnet. Die Schraube 2 weist eine Mittel-Längs-Achse 15 auf. In dem eingeschraubten Zustand der Schraube 2 in dem Bohrloch 4 fallen die Bohrloch-Längsachse 3 und die Mittel-Längs-Achse 15 zusammen.

Am Einführende 13 ist ein Schneidgewinde-Abschnitt A_{SG} angeordnet. Entlang des Schneidgewinde-Abschnitts A_{SG} erstreckt sich ein Schneidgewinde 16, das zum Einschneiden desselben in den Werkstoff 6 dient. Ausgehend vom Schneidgewinde-Abschnitt A_{SG} erstreckt sich entlang der Mittel-Längs-Achse 15 ein gewindeloser Kraftentkopplungs-Abschnitt A_{KE}. Entlang des Kraftentkopplungs-Abschnitts A_{KE} weist die Schraube 2 eine Oberfläche 17 auf, die besonders glatt ist. Die glatte Oberfläche 17 zeichnet sich dadurch aus, dass die maximale Rautiefe Rₘₐₓ höchstens 6,3 µm, insbesondere höchstens 1,0 µm, insbesondere höchstens 0,25 µm und insbesondere höchstens 0,1 µm beträgt.

Die Oberfläche 17 des Kraftentkopplungs-Abschnitts A_{KE} kann durch Schleifen und/oder Polieren der Metalloberfläche hergestellt sein. Gemäß dem gezeigten Ausführungsbeispiel ist im Bereich des Kraftentkopplungs-Abschnitts A_{KE} zumindest abschnittsweise ein Schrumpfschlauch aufgeschrumpft. Beide Maßnahmen, also eine Oberflächenbehandlung der Oberfläche 17 durch Schleifen und/oder Polieren sowie das Aufschrumpfen eines Schrumpfschlauchs dienen dazu, die Oberfläche 17 mit einer geforderten maximalen Rautiefe zu schaffen, damit eine Kraftentkopplung zwischen dem Schneidgewinde-Abschnitt A_{SG} und dem Vorspann-Abschnitt A_{VG} zuverlässig möglich ist.

Die Länge l_{SG} des Schneidgewinde-Abschnitts A_{SG} entspricht im Wesentlichen der zweiten Bohrloch-Tiefe t₂. Gemäß dem gezeigten Ausführungsbeispiel gilt: l_{SG} ≈ 0,9 · t₂. Die Länge l_{KE} des Kraftentkopplungs-Abschnitts A_{KE} beträgt mindestens das 3fache, insbesondere mindestens das 5fache und insbesondere mindestens das 8fache der Länge l_{SG}. Aus Platzgründen ist die Schnittdarstellung gemäß Fig. 1 entlang der Bohrloch-Längsachse 3 unterbrochen dargestellt.

Entlang der Mittel-Längs-Achse 15 schließt sich an den Kraftentkopplungs-Abschnitt A_{KE} ein Vorspann-Abschnitt A_{VG} der Schraube 2 an. Der Vorspann-Abschnitt A_{VG} ist als einstückiges mit dem Kern 12 ausgebildetes Vorspanngewinde 18 ausgeführt. Das Vorspanngewinde 18 ist insbesondere als metrisches Außengewinde ausgeführt. Auf das Vorspanngewinde 18 ist eine Kontermutter als Vorspannmittel 19 aufgeschraubt. Das Vorspannmittel 19 ist über eine Unterlegscheibe 20 an der Auflagefläche 9 des Werkstoffs 6 abgestützt. Durch Aufschrauben der Kontermutter kann eine Vorspannung durch Selbstdehnung der Schraube 2 gezielt und insbesondere stufenlos einstellbar aufgebracht werden.

Zum Eindrehen der Schraube 2 in das Bohrloch 4 des Werkstoffs 6 ist an dem Außenende 14 ein Drehmomentübertragungsmittel 21 in Form eines Außensechskant-Profils vorgesehen. Das Drehmomentübertragungsmittel 21 ist einstückig mit dem Kern 12 der Schraube 2 ausgeführt. Das Drehmomentübertragungsmittel 21 ist in einem Drehmomentübertragungs-Abschnitt A_{DM} angeordnet. Der Drehmomentübertragungs-Abschnitt A_{DM} bildet das äußere Ende der Schraube 2 entlang der Mittel-Längs-Achse 15.

Entlang der Mittel-Längs-Achse 15 ist nach dem Kraftentkopplungs-Abschnitt A_{KE} der Vorspann-Abschnitt A_{VG} vorgesehen. Die Länge l_{VG} des Vorspann-Abschnitts A_{VG} entspricht im Wesentlichen der Länge l_{SG} des Schneidgewindes. Das Schneidgewinde 16 weist einen Schneidgewinde-Durchmesser D_{SG} auf, der den maximalen Durchmesser der Schraube darstellt. Insbesondere ist der Kern 12, insbesondere entlang des Kraftentkopplungs-Abschnitts A_{KE} kleiner als der Schneidgewinde-Durchmesser D_{SG}.

Ein Außendurchmesser dₐ der Unterlegscheibe 20 ist größer als der erste Bohrloch-Durchmesser d₁. Insbesondere gilt: dₐ ≥ 1,2 · d₁. Gemäß dem gezeigten Ausführungsbeispiel ist der erste Bohrloch-Durchmesser d₁ größer als der zweite Bohrloch-Durchmesser d₂. Insbesondere gilt: d₁ ≥ 1,05 · d₂. Der Schneidgewinde-Durchmesser D_{SG} ist derart gewählt, dass er einerseits größer ist als der erste Bohrloch-Durchmesser d₁ und andererseits gewährleistet ist, dass das Verhältnis von D_{SG}/d₁ ≤ 1,05 ist. Weiterhin ist der Schneidgewinde-Durchmesser D_{SG} größer als der zweite Bohrloch-Durchmesser d₂, insbesondere gilt: D_{SG} ≥ 1,01 · d₂.

Nachfolgend wird anhand der Fig. 1 bis 3 die Herstellung einer Vorspann-Anordnung 1 näher erläutert. Ausgehend von einem ungebohrten Werkstoff 6 wird zunächst das Bohrloch 4 hergestellt. Dazu wird zunächst entlang der Gesamtbohrlochtiefe t₃ ein Bohrloch mit dem zweiten Bohrloch-Durchmesser d₂ gebohrt. Anschließend wird das Bohrloch 4 mit dem ersten Bohrloch-Durchmesser d₁ auf die erste Bohrloch-Tiefe t₁ aufgebohrt. Dadurch wird ein Stufen-Bohrloch geschaffen, das entlang des ersten Bohrloch-Abschnitts 10, der der Bohrloch-Öffnung 8 zugewandt ist, einen ersten Bohrloch-Durchmesser d₁ aufweist, der größer ist als der zweite Bohrloch-Durchmesser d₂. Dieses Stufen-Bohrloch ist unkompliziert und kostengünstig herstellbar.

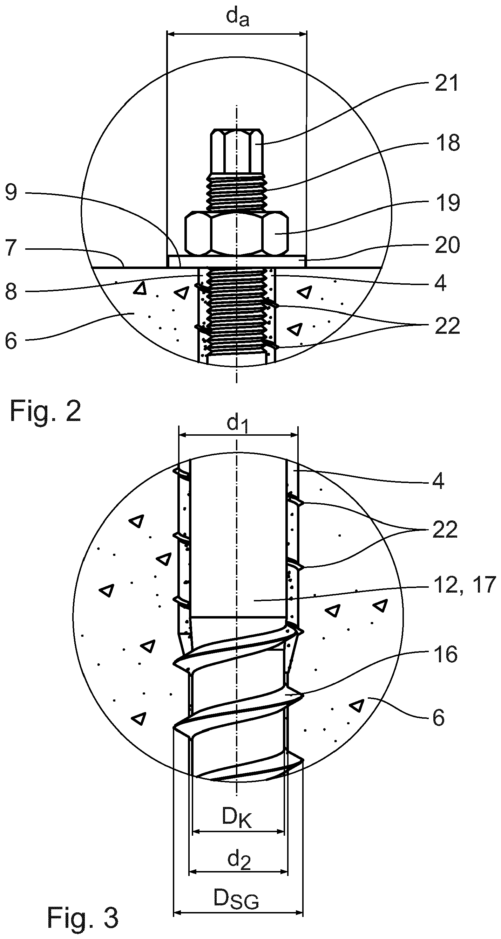

Anschließend wird in das so geschaffene Bohrloch 4 eine aushärtbare Masse 5 gefüllt. Anschließend wird die erfindungsgemäße Schraube 2 in das Bohrloch eingeschraubt. Dazu wird die Schraube 2 mit dem Einführende 13 durch die Bohrloch-Öffnung 8 in das Bohrloch 4 eingeführt. Das Schneidgewinde 16, das im Bereich des Einführendes 13 der Schraube 2 angeordnet ist, kommt in Kontakt mit der Bohrlochwandung des Bohrlochs 4. Dadurch, dass der Schneidgewinde-Durchmesser D_{SG} größer ist als der erste Bohrloch-Durchmesser d₁ wird infolge des Eindrehens der Schraube 2 die Bohrlochwandung des Bohrlochs 4 durch Ritzen und/oder Kratzen des Schneidgewindes 16 an der Bohrlochwandung aufgeraut. Die dadurch hervorgerufenen Rillen bzw. Riefen 22 in der Bohrlochwandung sind in der Detailansicht gemäß Fig. 2 und 3 gezeigt. Durch das Aufrauen der Bohrlochwandung ist eine sichere Verbindung zwischen der aushärtbaren Masse 5, dem Bohrloch 4 und der Schraube 2 gewährleistet.

Gleichzeitig ist der erste Bohrloch-Durchmesser d₁ groß genug, damit das Schneidgewinde 16 durch das Eindrehen der Schraube 2, insbesondere zu großen Einschraubtiefen, sich nicht abnützt. Dadurch ist ein sicheres Einschrauben der Schraube 2 gewährleistet. Dadurch, dass die Schraube 2 mit dem Schneidgewinde 16 entlang eines äußeren Umfangs an der Bohrlochwandung anliegt, ist die Schraube 2 während des Einschraubens an dem Bohrloch 4 sicher abgestützt. Dies führt zur Stabilisierung des Einschraubvorgangs.

Die aushärtbare Masse 5, die in einem unteren Sacklochbereich der Bohrung 4 als Reservoir angeordnet ist, wird, sobald die Schraube 2 mit dem Einführende 13 auf das Reservoir der aushärtbaren Masse 5 trifft, entgegen der Einschraubrichtung von dem Reservoir zu der Bohrlochöffnung 8 verdrängt. Dazu ist der zweite Bohrloch-Durchmesser d₂ geringfügig größer gewählt als der Kerndurchmesser D_{K} im Bereich des Schneidgewindes 16. Insbesondere gilt: d₂ > D_{K}, insbesondere d₂ ≥ 1,02 · D_{K}.

Die aushärtbare Masse 5 dient insbesondere dazu, entlang des ersten Bohrlochabschnitts 10 einen Ringspalt zwischen dem Kern 12 der Schraube 2 und der Bohrlochwandung mit dem ersten Bohrloch-Durchmesser d₁ zu füllen. Dadurch ist die Tragfähigkeit der Vorspann-Anordnung zusätzlich verbessert, da ein Ringspalt zwischen der Schraube 2 und dem Werkstoff 6 vermieden wird. Zusätzlich verhindert die aushärtbare Masse 5 den Eintritt von Feuchtigkeit in das Bohrloch. Die Gefahr von Korrosion der Schraube 2 ist reduziert und insbesondere vermieden.

Zum Einschrauben der Schraube 2 wird diese durch das Drehmomentübertragungsmittel 21 mit einem dafür vorgesehenen Werkzeug beaufschlagt. Nachdem die gewünschte Einschraubtiefe erreicht ist, wird über das Außenende 14 der Schraube 2 eine Unterlegscheibe 20 aufgelegt und anschließend mittels einer Kontermutter als Vorspannmittel 19 die Schraube 2 wie gewünscht vorgespannt.

Grundsätzlich ist es auch möglich, die Vorspann-Anordnung gemäß dem gezeigten Ausführungsbeispiel ohne die aushärtbare Masse 5 auszuführen. Dadurch, dass die Schraube 2 das Schneidgewinde 16 aufweist, kann die Schraube 2 unmittelbar in dem Werkstoff 6 verankert werden. Insbesondere dann, wenn zu erwartende Lastwerte nicht zu hoch sind, kann somit auf die Verwendung einer Verbundmasse verzichtet werden. In diesem Fall kann die Schraube 2 beispielsweise nach ihrem Einsatz in den Werkstoff 6 wieder problemlos entfernt werden.

## Patentansprüche

1. Schraube zum Einschrauben in ein Bohrloch (4) in einen porösen Werkstoff (6), wobei die Schraube (2) umfasst
a. einen Kern (12) mit
i. einem Einführende (13) und
ii. einer Mittel-Längs-Achse (15),
b. ein einstückig mit dem Kern (12) ausgebildetes, sich entlang eines am Einführende (13) angeordneten Schneidgewinde-Abschnitts (A_{SG}) erstreckendes Schneidgewinde (16) zum Einschneiden desselben in den Werkstoff (6),
c. einen einstückig mit dem Kern (12) ausgebildeten Vorspann-Abschnitt (A_{VG}) zum Vorspannen der Schraube (2) in dem Werkstoff (6), **gekennzeichnet durch**
d. einen entlang der Mittel-Längs-Achse (15) zwischen dem Schneidgewinde-Abschnitt (A_{SG}) und dem Vorspann-Abschnitt (A_{VG}) angeordneten Kraftentkopplungs-Abschnitt (A_{KE}), wobei der Kraftentkopplungs-Abschnitt (A_{KE}) eine glatte Oberfläche (17) derart aufweist, dass die Schraube (2) in dem Kraftentkopplungs-Abschnitt (A_{KE}) von dem porösen Werkstoff (6) sowie einer möglicherweise zwischen dem Werkstoff (6) und der Schraube (2) vorhandenen aushärtbaren Klebemasse (5) entkoppelt ist.

2. Schraube gemäß Anspruch 1, **dadurch gekennzeichnet, dass** der Vorspann-Abschnitt (A_{VG}) ein einstückig mit dem Kern (12) ausgebildetes Vorspanngewinde (18) aufweist, an dem ein Vorspannmittel (19), insbesondere eine Kontermutter, angeschraubt werden kann

3. Schraube gemäß einem der vorstehenden Ansprüche, **dadurch gekennzeichnet, dass** die glatte Oberfläche (17) mit einer maximalen Rautiefe (Rₘₐₓ) von höchstens 6,3 µm, insbesondere von höchstens 1,0 µm, insbesondere von höchstens 0,25 µm, insbesondere von höchstens 0,1 µm ausgeführt ist.

4. Schraube gemäß einem der vorstehenden Ansprüche, **dadurch gekennzeichnet, dass** die Oberfläche (17) des Kraftentkopplungs-Abschnitts (A_{KE}) durch Schleifen und/oder Polieren hergestellt ist.

5. Schraube gemäß einem der Ansprüche 1 bis 3, **dadurch gekennzeichnet, dass** in dem Kraftentkopplungs-Abschnitt (A_{KE}) ein Schrumpfschlauch aufgeschrumpft ist.

6. Schraube gemäß einem der vorstehenden Ansprüche, **gekennzeichnet durch** einen Schneidgewinde-Durchmesser (D_{SG}) des Schneidgewindes (16) als maximalen Durchmesser der Schraube (2).

7. Schraube gemäß einem der vorstehenden Ansprüche, **gekennzeichnet durch** ein Drehmomentübertragungsmittel (21), insbesondere als Außen-Sechskant-Profil.

8. Schraube gemäß Anspruch 7, **dadurch gekennzeichnet, dass** das Drehmomentübertragungsmittel (21) an einem dem Einführende (13) gegenüberliegenden Außenende (14) angeordnet ist.

9. Vorspann-Anordnung umfassend
a. ein in einem Werkstoff (6) angeordnetes Bohrloch (4) mit einer Bohrloch-Längsachse (3) und
b. eine Schraube (2) gemäß einem der vorstehenden Ansprüche, wobei die Schraube (2) in das Bohrloch (4) eingeschraubt ist.

10. Vorspann-Anordnung gemäß Anspruch 9, **dadurch gekennzeichnet, dass** das Bohrloch (4) einen einer Bohrloch-Öffnung (8) benachbarten, ersten Bohrloch-Durchmesser (d₁) und einen der Bohrloch-Öffnung (8) entfernten, zweiten Bohrloch-Durchmesser (d₂) aufweist.

11. Vorspann-Anordnung gemäß Anspruch 10, **dadurch gekennzeichnet, dass** erste Bohrloch-Durchmesser (d₁) größer ist als der zweite Bohrloch-Durchmesser (d₂), wobei insbesondere gilt: d₁ ≥ 1,05 · d₂, insbesondere d₁ ≥ 1,1 · d₂ und insbesondere d₁ ≥ 1,2 · d₂.

12. Vorspann-Anordnung gemäß Anspruch 10 oder 11, **dadurch gekennzeichnet, dass** ein Schneidgewinde-Durchmesser (D_{SG}) des Schneidgewindes (16) größer ist als der erste Bohrloch-Durchmesser (d₁), wobei insbesondere gilt: 1 < D_{SG} / d₁ ≤ 1,05, insbesondere 1 < D_{SG} / d₁ ≤ 1,02 und insbesondere 1 < D_{SG} / d₁ ≤ 1,01.

13. Vorspann-Anordnung gemäß einem der Ansprüche 10 bis 12, **dadurch gekennzeichnet, dass** ein Schneidgewinde-Durchmesser (D_{SG}) des Schneidgewindes (16) größer ist als der zweite Bohrloch-Durchmesser (d₂), wobei insbesondere gilt: D_{SG} ≥ 1,01 · d₂, insbesondere D_{SG} ≥ 1,05 · d₂ und insbesondere D_{SG} ≥ 1,1 · d₂.

14. Vorspann-Anordnung gemäß einem der Ansprüche 9 bis 13, **gekennzeichnet durch** eine Unterlegscheibe (20), die zwischen einem an der Schraube befestigbaren Vorspannmittel (19) und einer Auflagefläche (9) des Werkstoffs (6) angeordnet ist.

15. Vorspann-Anordnung gemäß Anspruch 14, **dadurch gekennzeichnet, dass** die Auflagefläche (9) gegenüber einer Außenseite (7) des Werkstoffs (6) entlang der Bohrloch-Längsachse (3) nach hinten versetzt angeordnet ist.

## Claims

1. Screw to be screwed into a drill hole (4) in a porous material (6), the screw (2) comprising
a. a core (12) with
i. an insert end (13) and
ii. a longitudinal center axis (15),
b. a tapping thread (16) being formed in one piece with the core (12) and extending along a tapping thread portion (A_{SG}) arranged at the insert end (13) to cut a thread into the material (6),
c. a preloading portion (A_{VG}) formed in one piece with the core (12) to preload the screw (2) in the material (6), **characterized by**
d. a force decoupling portion (A_{KE}) arranged along the longitudinal center axis (15) between the tapping thread portion (A_{SG}) and the preloading portion (A_{KE}), the force decoupling portion (A_{KE}) having a smooth surface (17) such that the screw (2) is decoupled from the porous material (6) in the force decoupling portion (A_{KE}) and from a curable adhesive material (5) that may be provided between the material (6) and the screw (2).

2. Screw according to claim 1, **characterized in that** the preloading portion (A_{VG}) has a preloading thread (18) formed in one piece with the core (12), the preloading thread (18) allowing a preloading means (19), in particular a lock nut, to be screwed thereon.

3. Screw according to any one of the preceding claims, **characterized in that** the smooth surface (17) is configured such as to have a maximum roughness depth (Rₘₐₓ) of at most 6.3 µm, in particular of at most 1.0 µm, in particular of at most 0.25 µm, in particular of at most 0.1 µm.

4. Screw according to any one of the preceding claims, **characterized in that** the surface (17) of the force decoupling portion (A_{KE}) is produced by grinding and/or polishing.

5. Screw according to any one of claims 1 to 3, **characterized in that** a heat-shrink tube is heat-shrunk onto the inner surface of the force decoupling portion (AKE).

6. Screw according to any one of the preceding claims, **characterized by** a tapping thread diameter (D_{SG}) of the tapping thread (16) as maximum diameter of the screw (2).

7. Screw according to any one of the preceding claims, **characterized by** a torque transmitting means (21), configured in particular as a hexagon head profile.

8. Screw according to claim 7, **characterized in that** the torque transmitting means (21) is arranged at an outer end (14) arranged opposite to the insert end (13).

9. Preloading assembly comprising
a. a drill hole (4) with a drill hole longitudinal axis (3) arranged in a material (6), and
b. a screw (2) according to any one of the preceding claims, the screw (2) being screwed into the drill hole (4).

10. Preloading assembly according to claim 9, **characterized in that** the drill hole (4) has a first drill hole diameter (dᵢ) adjacent to a drill hole opening (8) and a second drill hole diameter (d₂) remote from the drill hole opening (8).

11. Preloading assembly according to claim 10, **characterized in that** the first drill hole diameter (dᵢ) is greater than the second drill hole diameter (d₂) with in particular d₁ ≥ 1.05 · d₂, in particular d₁ ≥ 1.1 · d₂, and in particular d₁ ≥ 1.2 · d₂.

12. Preloading assembly according to claim 10 or 11, **characterized in that** a tapping thread diameter (D_{SG}) of the tapping thread (16) is greater than the first drill hole diameter (dᵢ), with in particular 1 < D_{SG} / d₁ ≤ 1.05, in particular 1 < D_{SG} / d₁ ≤ 1.02, and in particular 1 < D_{SG} / d₁ ≤ 1.01.

13. Preloading assembly according to any one of claims 10 to 12, **characterized in that** a tapping thread diameter (D_{SG}) of the tapping thread (16) is greater than the second drill hole diameter (d₂), with in particular D_{SG} ≥ 1.01 · d₂, in particular D_{SG} ≥ 1.05 · d₂, and in particular D_{SG} ≥ 1.1 · d₂.

14. Preloading assembly according to any one of claims 9 to 13, **characterized by** a washer (20) arranged between a preloading means (19) securable to the screw and a contact surface (9) of the material (6).

15. Preloading assembly according to claim 14, **characterized in that** the contact surface (9) is offset towards the rear along the drill hole longitudinal axis (3) in relation to an outside (7) of the material (6).

## Revendications

1. Vis à visser dans un trou de perçage (4) dans un matériau (6) poreux, dans laquelle la vis (2) comprend
a. une âme (12) avec
i. une extrémité d'insertion (13) et
ii. un axe longitudinal central (15),
b. un filetage taraudeur (16) formé d'un seul tenant avec l'âme (12), s'étendant le long d'une section de filetage taraudeur (A_{SG}) agencée contre l'extrémité d'insertion (13) pour inciser le même filetage taraudeur dans le matériau (6),
c. une section de sollicitation (A_{VG}) formée d'un seul tenant avec l'âme (12) pour solliciter la vis (2) dans le matériau (6), **caractérisé par**
d. une section de découplage de force (A_{KF}) agencée le long de l'axe longitudinal central (15) entre la section de filetage taraudeur (A_{SG}) et la section de sollicitation (A_{VG}), dans laquelle la section de découplage de force (A_{KE}) présente une surface (17) lisse telle que la vis (2) dans la section de découplage de force (A_{KE}) soit découplée du matériau (6) poreux ainsi que d'une masse adhésive durcissable (5) éventuellement présente entre le matériau (6) et la vis (2).

2. Vis selon la revendication 1, **caractérisée en ce que** la section de sollicitation (A_{VG}) présente un filetage de sollicitation (18) formé d'un seul tenant avec l'âme (12), contre lequel un moyen de sollicitation (19), en particulier un contre-écrou, peut être vissé.

3. Vis selon l'une quelconque des revendications précédentes, **caractérisée en ce que** la surface (17) lisse est conçue avec une profondeur de rugosité maximale (Rₘₐₓ) d'au plus 6,3 µm, en particulier d'au plus 1,0 µm, en particulier d'au plus 0,25 µm, en particulier d'au plus 0,1 µm.

4. Vis selon l'une quelconque des revendications précédentes, **caractérisée en ce que** la surface (17) de la section de découplage de force (A_{KE}) est fabriquée par meulage et/ou polissage.

5. Vis selon l'une quelconque des revendications 1 à 3, **caractérisée en ce que** dans la section de découplage de force (A_{KE}) une gaine contractile est rétractée.

6. Vis selon l'une quelconque des revendications précédentes, **caractérisée par** un diamètre de filetage taraudeur (D_{SG}) du filetage taraudeur (16) en tant que diamètre maximal de la vis (2).

7. Vis selon l'une quelconque des revendications précédentes, **caractérisée par** un moyen de transmission de couple de rotation (21), en particulier en tant que profil hexagonal extérieur.

8. Vis selon la revendication 7, **caractérisée en ce que** le moyen de transmission de couple de rotation (21) est agencé contre une extrémité extérieure (14) opposée à l'extrémité d'insertion (13).

9. Agencement de sollicitation comprenant
a. un trou de perçage (4) agencé dans un matériau (6) avec un axe longitudinal de trou de perçage (3) et
b. une vis (2) selon l'un quelconque des revendications précédentes, dans lequel la vis (2) est vissée dans le trou de perçage (4).

10. Agencement de sollicitation selon la revendication 9, **caractérisé en ce que** le trou de perçage (4) présente un premier diamètre de trou de perçage (d₁) adjacent à une ouverture de trou de perçage (8) et un second diamètre de trou de perçage (d₂) éloigné de l'ouverture de trou de perçage (8).

11. Agencement de sollicitation selon la revendication 10, **caractérisé en ce que** le premier diamètre de trou de perçage (d₁) est plus grand que le second diamètre de trou de perçage (d₂), où en particulier : d₁ ≥ 1,05.d₂, en particulier d₁ ≥ 1,1.d₂ et en particulier d₁ ≥ 1,2.d₂.

12. Agencement de sollicitation selon la revendication 10 ou 11, **caractérisé en ce qu'**un diamètre de filetage taraudeur (D_{SG}) du filetage taraudeur (16) est plus grand que le premier diamètre de trou de perçage (d₁), où en particulier : 1 < D_{SG} / d₁ ≤ 1,05, en particulier 1 < D_{SG} / d₁ ≤ 1,02 et en particulier 1 < D_{SG} / d₁ ≤ 1,01.

13. Agencement de sollicitation selon l'une quelconque des revendications 10 à 12, **caractérisé en ce qu'**un diamètre de filetage taraudeur (D_{SG}) du filetage taraudeur (16) est plus grand que le second diamètre de trou de perçage (d₂), où en particulier : D_{SG} ≥ 1,01.d₂, en particulier D_{SG} ≥ 1,05.d₂ et en particulier D_{SG} ≥ 1,1.d₂.

14. Agencement de sollicitation selon l'une quelconque des revendications 9 à 13, **caractérisé par** une rondelle (20) qui est agencée entre un moyen de sollicitation (19) pouvant être fixé contre la vis et une surface d'appui (9) du matériau (6).

15. Agencement de sollicitation selon la revendication 14, **caractérisé en ce que** la surface d'appui (9) est agencée de façon décalée vers l'arrière par rapport à un côté extérieur (7) du matériau (6) le long de l'axe longitudinal de trou de perçage (3).
